# EUROPÄISCHE PATENTSCHRIFT

(11) **EP 1 548 216 B1**
(45) Veröffentlichungstag und Bekanntmachung des Hinweises auf die Patenterteilung: **24.08.2011**
(21) Anmeldenummer: 04026600.9
(22) Anmeldetag: 09.11.2004
(51) Int. Cl.: E05B 71/00, B62H 5/16, B62H 5/00

(54) **Sicherungssystem mit einem Schwenkbügel-Rahmenschloss für ein Zweirad und mit einem Sicherungsseil**
Locking system for a bicycle with a frame lock with pivotable shackle and a security cable
Système de verrouillage pour bicyclette avec une serrure d'encerclement à anse pivotante et une corde de sécurité

(30) Priorität: 12.12.2003 DE 10358300
(43) Veröffentlichungstag der Anmeldung: 29.06.2005
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A- 1 416 110
- WO-A-83/04009
- WO-A-90/02074
- JP-A- 2001 001 967
- NL-A- 8 300 423

## Beschreibung

Die Erfindung betrifft ein Sicherungssystem mit einem Schwenkbügel-Rahmenschloss für ein Zweirad und mit einem Sicherungsseil nach dem Oberbegriff des Anspruchs 1. Ein derartiges Schwenkbügel-Rahmenschloss besitzt eine Bügellagereinrichtung und eine Bügelaufnahmeeinrichtung, die direkt oder mittels eines starren Verbindungsbügels an dem Rahmen des Zweirads montiert sind. An der Bügellagereinrichtung ist ein Schwenkbügel schwenkbar gelagert, der zwischen einer beispielsweise vertikalen Freigabestellung und einer beispielsweise horizontalen Schließstellung schwenkbar ist, wobei der Schwenkbügel in der Schließstellung ein Speichenrad des Zweirads durchquert. Die Bügelaufnahmeeinrichtung dient zur Aufnahme des freien Endes des Schwenkbügels in dessen Schließstellung. Das Speichenrad kann also blockiert werden, indem der Schwenkbügel in die Schließstellung geschwenkt und in dieser Schließstellung mittels eines Verriegelungsmechanismus verriegelt wird.

Ferner besitzt ein derartiges Schwenkbügel-Rahmenschloss üblicherweise eine Handhabe, die mit dem Schwenkbügel verbunden ist, um den Schwenkbügel aus der Freigabestellung in die Schließstellung schwenken zu können.

Außerdem sind derartige Rahmenschlösser bekannt, bei denen zusätzlich eine Befestigungseinrichtung vorgesehen ist, durch die ein Seilkloben eines Sicherungsseils an dem Rahmenschloss befestigt werden kann. Ein derartiges Sicherungsseil gestattet ein zusätzliches Sichern des Zweirads an einem Befestigungsobjekt, beispielsweise an einem Laternenpfosten. Dadurch ist das Zweirad nicht nur aufgrund des Eingriffs des Schwenkbügels in das Speichenrad gegen ein unbefugtes Wegfahren gesichert, sondern das Zweirad kann auch nicht von dem Befestigungsobjekt entfernt, beispielsweise weggetragen werden.

Bei bekannten Schwenkbügel-Rahmenschlössern ist diese Befestigungseinrichtung beispielsweise durch den Verriegelungsmechanismus gebildet, der eigentlich zum Verriegeln des Schwenkbügels in der Schließstellung dient. Der Aufbau eines derartigen Verriegelungsmechanismus, der gleichzeitig zum Verriegeln des Schwenkbügels und zum Fixieren eines Sicherungsseils dienen soll, ist jedoch unerwünscht aufwendig. Außerdem kann sich die Handhabung eines derartigen Rahmenschlosses als umständlich erweisen, da zum einen die Handhabe des Schwenkbügels, zum anderen der Seilkloben, und schließlich auch noch der eigentliche Verriegelungsmechanismus betätigt werden müssen.

Die JP 2001 001967 A beschreibt ein Sicherungssystem mit den Merkmalen des Oberbegriffs des Anspruchs 1.

Aus der WO 83/04009 A ist ein Schwenkbügel-Rahmenschloss bekannt, mit einer Bügellagereinrichtung, an der ein Schwenkbügel schwenkbar gelagert ist, einer Bügelaufnahmeeinrichtung zur Aufnahme des freien Endes des Schwenkbügels, und einer Handhabe für eine Schwenkbetätigung des Schwenkbügels.

Die WO 90/02074 A offenbart ein Sicherungssystem mit einem Schwenkbügel-Rahmenschloss und einem Sicherungsseil, bei dem ein freies Ende eines Schwenkbügels und ein Seilkloben des Sicherungsseils mittels eines gemeinsamen Schließzylinders oder mittels zweier separater Schließzylinder an einer Bügelaufnahmeeinrichtung des Rahmenschlosses gesichert werden können.

Es ist daher eine Aufgabe der Erfindung, ein Schwenkbügel-Rahmenschloss mit einem einfachen Aufbau zu schaffen, an dem bei einfacher Handhabung ein Seilkloben eines Sicherungsseils gesichert werden kann.

Diese Aufgabe wird durch ein Sicherungssystem mit den Merkmalen des Anspruchs 1 gelöst.

Die Befestigungseinrichtung des erfindungsgemäßen Sicherungssystems zeichnet sich also durch einen Hintergreifungsabschnitt aus, der mit der Schwenkbügel-Handhabe zusammenwirkt, um mit einer Schwenkbetätigung des Schwenkbügels automatisch auch einen Seilkloben an dem

Hintergreifungsabschnitt sichern zu können. Somit ist keine aufwendige Modifizierung des eigentlichen Verriegelungsmechanismus des Rahmenschlosses erforderlich. Stattdessen muss lediglich ein Hintergreifungsabschnitt vorgesehen sein, an dem der Seilkloben eingeführt oder eingehängt werden kann. Die ohnehin vorhandene Schwenkbügel-Handhabe vermag den Seilkloben an dem Hintergreifungsabschnitt gegen eine Entnahme, insbesondere gegen eine seitliche Entnahme zu sichern bzw. zu blockieren.

Auch die Handhabung dieses Rahmenschlosses ist vorteilhaft einfach, da mit einer Schwenkbetätigung des Schwenkbügels mittels der Handhabe, die zum Verriegeln des betreffenden Speichenrads des Zweirads ohnehin erforderlich ist, gleichzeitig auch ein Seilkloben an dem Rahmenschloss und insbesondere an dem genannten Hintergreifungsabschnitt gesichert werden kann. Auf diese Weise ist sogar möglich, dass die Handhabung des Seilklobens einerseits und der Schwenkbügel-Handhabe andererseits gemeinsam mittels einer einzigen Handbewegung des Benutzers erfolgen.

Das im Zusammenhang mit dem erfindungsgemäßen Sicherungssystem genannte Sicherungsseil ist nicht unbedingt Teil des Rahmenschlosses, sondern kann eine hiervon unabhängige Einheit sein.

Bei dem Sicherungsseil kann es sich beispielsweise um ein Stahlseil, ein Seil mit gehärteten Hülsen, ein Spiralkabel, eine Kette oder einen Gelenkstabbügel handeln. Das dem Seilkloben gegenüberliegende Ende des Sicherungsseils kann als Schlaufe ausgebildet sein, die die Ausbildung einer Schlinge zum Umgreifen beispielsweise eines Laternenpfostens ermöglicht. Es ist jedoch auch möglich, dass das dem Seilkloben gegenüberliegende Ende des Sicherungsseils an dem Rahmenschloss dauerhaft befestigt ist, so dass das Rahmenschloss und das Sicherungsseil eine einzige Einheit bilden.

Vorzugsweise wirken der Hintergreifungsabschnitt der Befestigungseinrichtung und die Handhabe dergestalt zusammen, dass die Handhabe den Seilkloben gegen eine seitliche Entnahme aus dem Hintergreifungsabschnitt sichert bzw. blockiert, wenn die Handhabe in die Schließstellung des Schwenkbügels geschwenkt worden ist.

Weiterhin ist es bevorzugt, wenn der Hintergreifungsabschnitt den mit der Befestigungseinrichtung verbundenen Seilkloben gegen eine axiale Entnahme - bezogen auf die Längsachse des Seilklobens - sichert bzw. blockiert.

Insbesondere kann der Seilkloben an seinem axialen Ende einen Sicherungsbund besitzen, wobei der Seilkloben derart seitlich in die Befestigungseinrichtung eingeführt wird, dass der Hintergreifungsabschnitt den Sicherungsbund des Seilklobens zumindest entlang eines Teils des Umfangs hintergreift, um eine axiale Sicherung zu bewirken.

Gemäß einer besonders vorteilhaften Ausführungsform kann der Seilkloben auf die Handhabe aufgesetzt werden, beispielsweise indem die Handhabe als ein Aufsetzdorn und der Seilkloben hohl mit einer Aufnahmeöffnung zur Aufnahme dieses Aufsetzdorns ausgebildet sind. In diesem Fall kann die Handhabe indirekt, nämlich mittels des aufgesetzten Seilklobens schwenkbetätigt werden, um den Schwenkbügel aus der Freigabestellung in die Schließstellung zu schwenken. Durch diese Schwenkbewegung wird die Handhabe mit aufgesetztem Seilkloben derart seitlich in die Befestigungseinrichtung eingeführt, dass der Hintergreifungsabschnitt, wie bereits erläutert - einen Sicherungsbund des Seilklobens zumindest teilweise hintergreift. Bei dieser Ausführungsform ist also eine besonders einfache Handhabung des Rahmenschlosses möglich, da der Benutzer lediglich mit einer Hand den Seilkloben auf die Handhabe aufsetzen und anschließend mittels des weiterhin gehaltenen Seilklobens die Handhabe schwenken kann, um den Schwenkbügel in die Schließstellung zu bringen.

Alternativ zu dieser Ausführungsform ist es jedoch auch möglich, dass erst der Seilkloben mit einem Sicherungsbund seitlich in die Befestigungseinrichtung eingeführt wird und danach die Handhabe derart geschwenkt wird, dass zum einen der Schwenkbügel aus der Freigabestellung in die Schließstellung bewegt wird und zum anderen die Handhabe den Seilkloben nun gegen eine seitliche Entnahme aus der Befestigungseinrichtung blockiert.

Gemäß einer vorteilhaften Weiterbildung ist der Schwenkbügel an der Bügellagereinrichtung entlang der Längsachse des Bügels in eine axiale Grundposition vorgespannt, und die Bügellagereinrichtung besitzt eine Blockiereinrichtung, die den Schwenkbügel gegen eine unbeabsichtigte Schwenkbewegung sichert, solange der Schwenkbügel sich in der Freigabestellung befindet und die axiale Grundposition einnimmt. Aus dieser Position kann der Schwenkbügel direkt mittels der Handhabe oder indirekt mittels des auf die Handhabe aufgesetzten Seilklobens in eine axiale Schwenkposition axial verschoben werden, in der der Schwenkbügel aus der Freigabestellung in die Schließstellung frei geschwenkt werden kann. Mit anderen Worten verhindert die Blockiereinrichtung ein unerwünschtes Verschwenken des Schwenkbügels in Richtung des Speichenrads des Zweirads, so dass das Speichenrad insbesondere während der Fahrt des Zweirads nicht unbeabsichtigt von dem Schwenkbügel blockiert wird. Durch eine bewusste Axialbewegung des Schwenkbügels entgegen der Vorspannung wird die Blockade überwunden, und der Schwenkbügel kann frei geschwenkt werden.

Alternativ oder zusätzlich zu dieser Weiterbildung kann eine axiale Vorspannung des Schwenkbügels vorgesehen sein, wobei innerhalb der Schließstellung der Schwenkbügel mittels der Handhabe in eine axiale Verriegelungsposition verschoben werden kann, in der das freie Ende des Schwenkbügels in die Bügelaufnahmeeinrichtung eingreift, um dort verriegelt werden zu können. Auf diese Weise kann der Schwenkbügel nach Erreichen der - üblicherweise horizontalen - Schließstellung axial in Richtung der Bügelaufnahmeeinrichtung und eines darin beherbergten Verriegelungsmechanismus verschoben werden.

Es ist von Vorteil, wenn der Verriegelungsmechanismus zum Verriegeln des Schwenkbügels in seiner Schließstellung nicht auch in der Bügellagereinrichtung, sondern hiervon getrennt in der Bügelaufnahmeeinrichtung vorgesehen ist. Dadurch kann der Verriegelungsmechanismus nämlich besonders gut geschützt in einer zentralen Anordnung innerhalb eines Gehäuses der Bügelaufnahmeeinrichtung angeordnet sein, und es ergibt sich ein besonders kompakter und einfacher Aufbau des Verriegelungsmechanismus, beispielsweise mit einem herkömmlichen Schließzylinder in einer zentralen Anordnung.

Vor allem ist es aufgrund eines derartigen Aufbaus der Bügelaufnahmeeinrichtung mit zentral angeordnetem Schließzylinder möglich, einen Drehriegel zum Verriegeln des freien Endes des Schwenkbügels zu verwenden, der mittels des Schließzylinders zu einer Drehbewegung um die Längsachse des Schließzylinders antreibbar ist. Ein derartiger Drehriegel begünstigt einen kompakten Aufbau des Verriegelungsmechanismus, und er verhindert eine unbefugte Entriegelung des Schwenkbügels nach der Methode des "Stoßöffnens", bei der durch einzelne Hammerschläge ein vorgespannter Riegel kurzzeitig in seine Entriegelungsstellung gebracht werden soll. Außerdem kann ein derartiger Drehriegel kostengünstig aus gehärtetem Stahl gefertigt werden und bietet somit gegenüber herkömmlichen Druckguss-Riegeln eine erhöhte Aufbruchsicherheit.

Weitere Ausführungsformen sind in den Unteransprüchen genannt. Die Erfindung wird nachfolgend lediglich beispielhaft unter Bezugnahme auf die Zeichnungen erläutert.
- Fig. 1: zeigt ein Schwenkbügel-Rahmenschloss und ein Sicherungsseil, wobei der Schwenkbügel sich in einer Freigabestellung befindet.
- Fig. 2: zeigt das Rahmenschloss, wobei der Schwenkbügel sich in einer Schließstellung befindet und das Sicherungsseil an dem Rahmenschloss gesichert ist.
- Fig. 3a, 3b und 3c: zeigen eine Querschnittsansicht, eine Draufsicht bzw. eine Unteransicht einer Bügellagereinrichtung des Rahmenschlosses, wobei der Schwenkbügel sich innerhalb der Freigabestellung in einer axialen Grundposition befindet.
- Fig. 4: zeigt eine Querschnittsansicht der Bügellagereinrichtung, wobei der Schwenkbügel sich innerhalb der Freigabestellung in einer axialen Schwenkposition befindet.
- Fig. 5a und 5b: zeigen eine Frontquerschnittsansicht bzw. eine Seitenquerschnittsansicht der Bügellagereinrichtung, wobei der Schwenkbügel sich innerhalb der Schließstellung noch in der axialen Schwenkposition befindet.
- Fig. 5c: zeigt eine Bügelaufnahmeeinrichtung des Rahmenschlosses, wobei der Schwenkbügel sich innerhalb der Schließstellung in der axialen Schwenkposition befindet.
- Fig. 6a: zeigt eine Querschnittsansicht der Bügellagereinrichtung, wobei der Schwenkbügel sich innerhalb der Schließstellung in einer axialen Verriegelungsposition befindet.
- Fig. 6b: zeigt die Bügelaufnahmeeinrichtung, wobei der Schwenkbügel sich innerhalb der Schließstellung in der axialen Verriegelungsposition befindet.
- Fig. 7: zeigt eine Explosionsansicht verschiedener Teile der Bügelaufnahmeeinrichtung von schräg hinten.
- Fig. 8: zeigt eine der Fig. 5a entsprechende Querschnittsansicht eines Teils einer Bügellagereinrichtung gemäß einer alternativen Ausführungsform.

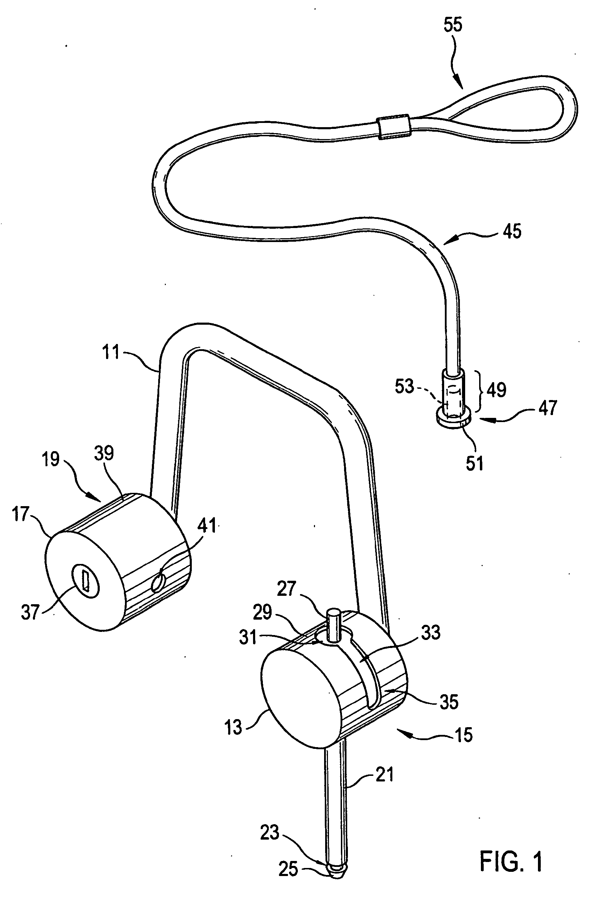

Fig. 1 zeigt in einer schematischen Perspektivansicht ein Schwenkbügel-Rahmenschloss mit einem im Wesentlichen U-förmigen Verbindungsbügel 11. An dem einen Ende des Verbindungsbügels 11 ist ein zylinderförmiges Topfgehäuse 13 einer Bügellagereinrichtung 15 befestigt, beispielsweise verschweißt. An dem anderen Ende des Verbindungsbügels 11 ist ein Topfgehäuse 17 einer Bügelaufnahmeeinrichtung 19 befestigt.

An der Bügellagereinrichtung 15 ist ein stangenartiger gerader Schwenkbügel 21 schwenkbar gelagert. In der Darstellung gemäß Fig. 1 nimmt der Schwenkbügel 21 eine vertikale Freigabestellung ein. Das freie Ende des Schwenkbügels 21 besitzt einen an der Vorderseite abgeschrägten, durch eine umlaufende Verriegelungsnut 23 abgesetzten Bügelkopf 25. An der gegenüberliegenden Seite der Bügellagereinrichtung 15 bildet der Schwenkbügel 21 mit einem stiftförmigen axialen Verlängerungsabschnitt eine Handhabe 27. Die Handhabe 27 ragt aus dem Topfgehäuse 13 durch eine schlüssellochförmige Aussparung an der Seitenwand 29 des Topfgehäuses 13 heraus, wobei diese Aussparung eine im Wesentlichen runde Entnahmeöffnung 31 und eine sich hieran anschließende, schmälere Schlitzaufnahme 33 aufweist. Die Seitenwand 29 des Topfgehäuses 13 bildet in der Umgebung der Schlitzaufnahme 33 einen Hintergreifungsabschnitt 35, wie nachfolgend noch erläutert wird.

An der Vorderseite der Bügelaufnahmeeinrichtung 19 ist die Vorderseite eines konzentrisch zu der Längsachse des Topfgehäuses 17 angeordneten Schließzylinders 37 zu erkennen. Die hohlzylindrische Seitenwand 39 des Topfgehäuses 17 besitzt eine der Bügellagereinrichtung 15 zugewandte Bügelaufnahmeöffnung 41.

Fig. 1 zeigt ferner ein Sicherungsseil 45, das an einem Ende einen Seilkloben 47 mit einem Halsabschnitt 49 und einem sich hieran anschließenden Sicherungsbund 51 besitzt. Der Seilkloben 47 ist hohl ausgebildet, mit einer Aufnahmeöffnung 53 an der Stirnseite (in Fig. 1 gestrichelt eingezeichnet). Das andere Ende des Sicherungsseils 45 ist als eine Schlaufe 55 ausgebildet.

Das in Fig. 1 gezeigte Schwenkbügel-Rahmenschloss und das Sicherungsseil 45 bilden gemeinsam ein Zweirad-Sicherungssystem, das wie folgt funktioniert:
Das Sicherungssystem dient zur Sicherung eines Zweirads, insbesondere eines Fahrrads, gegen Diebstahl. Zu diesem Zweck ist das Schwenkbügel-Rahmenschloss mittels des Verbindungsbügels 11 an dem Rahmen des Zweirads dergestalt dauerhaft befestigt, dass die beiden Schenkel des Verbindungsbügels 11 das hintere Speichenrad des Zweirads umgreifen (in Fig. 1 nicht gezeigt).
Der Seilkloben 47 des Sicherungsseils 45 wird beispielsweise um einen Laternenpfosten und durch die Schlaufe 55 geführt. Danach wird der Seilkloben 47 mit der Aufnahmeöffnung 53 auf die als Aufsetzdorn dienende Handhabe 27 des Rahmenschlosses aufgesetzt, wobei der Sicherungsbund 51 durch die Entnahmeöffnung 31 an der Seitenwand 29 des Topfgehäuses 13 geführt wird, so dass der Sicherungsbund 51 sich nun innerhalb der Seitenwand 29 befindet.
Anschließend wird die Handhabe 27 mittels des aufgesetzten Seilklobens 47 entgegen einer Vorspannung geringfügig axial noch weiter in das Topfgehäuse 13 gedrückt, um hierdurch eine Blockiereinrichtung zu lösen, wie nachfolgend noch erläutert wird. Daraufhin wird die Handhabe 27 mittels des aufgesetzten Seilklobens 47 um ca. 90° geschwenkt, um hierdurch den Schwenkbügel 21 aus der in Fig. 1 gezeigten vertikalen Freigabestellung in eine horizontale Schließstellung zu überführen. Die Handhabe 27 und der Halsabschnitt 49 bewegen sich dabei entlang der kanalartigen Schlitzaufnahme 33. Der Seilkloben 47 ist nun bereits gegen eine axiale Entnahme von der Handhabe 27 gesichert, da die als Hintergreifungsabschnitt 35 dienende Seitenwand 29 des Topfgehäuses 13 nun den Sicherungsbund 51 des Seilklobens 47 teilweise hintergreift.
Anschließend wird der Schwenkbügel 21 mittels des auf die Handhabe 27 aufgesetzten Seilklobens 47 entgegen der genannten Vorspannung noch weiter axial bewegt, um den Bügelkopf 25 in die Bügelaufnahmeöffnung 41 der Bügelaufnahmeeinrichtung 19 einzuführen und dort zu verriegeln, wie nachfolgend noch erläutert wird. Nun ist der Schwenkbügel 21 in der Schließstellung verriegelt, so dass das betreffende Speichenrad blockiert ist. Gleichzeitig ist der Seilkloben 47 an der Bügellagereinrichtung 15 nicht nur gegen eine axiale Entnahme, sondern mittels der Handhabe 27 auch gegen eine seitliche Entnahme aus dem Hintergreifungsabschnitt 35 blockiert.

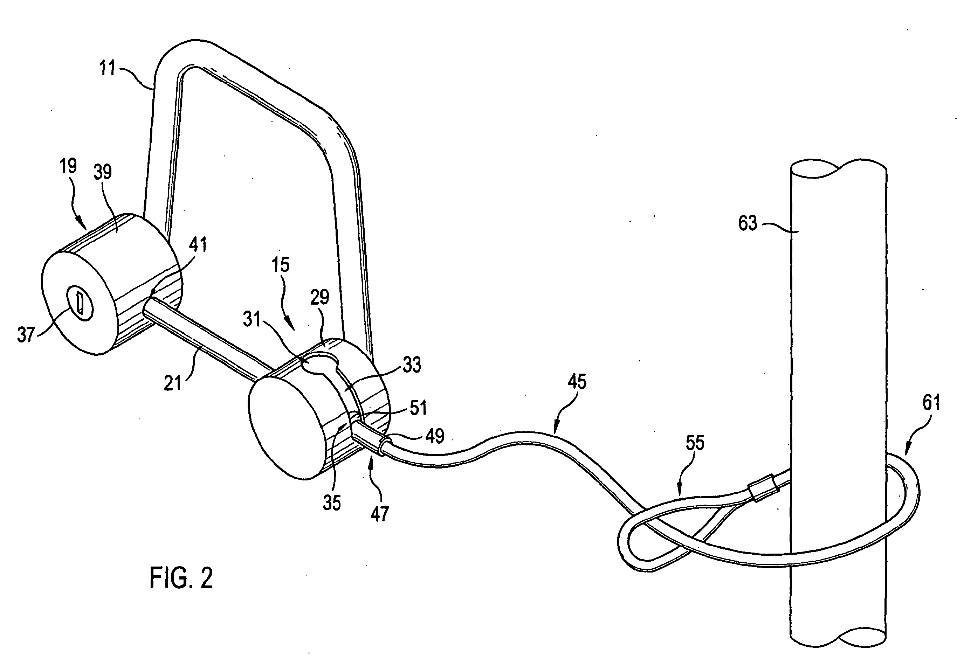

Fig. 2 zeigt den somit erreichten Zustand. Das Sicherungsseil 45 bildet mit der Schlaufe 55 eine Schlinge 61, die einen Laternenpfosten 63 umgreift. Der Seilkloben 47 ist mit dem Sicherungsbund 51 innerhalb der Schlitzaufnahme 33 der Bügellagereinrichtung 15 gefangen. Der Schwenkbügel 21 befindet sich in der horizontalen Schließstellung und ist an der Bügelaufnahmeeinrichtung 19 verriegelt. Das betreffende Zweirad ist somit zweifach gegen Diebstahl gesichert.

Das Entriegeln des Schwenkbügels 21 und Freigeben des Sicherungsseils 45 geschehen in umgekehrter Reihenfolge: Zunächst wird der Bügelkopf 25 durch entsprechende Betätigung des Schließzylinders 37 mittels eines zugehörigen Schlüssels entriegelt. Aufgrund der axialen Vorspannung des Schwenkbügels 21 verlässt dieser automatisch die Bügelaufnahmeöffnung 41. Mittels des auf die Handhabe 27 aufgesetzten Seilklobens 47 oder aufgrund einer entsprechenden Vorspannung wird der Schwenkbügel 21 nun zurück in die vertikale Freigabestellung geschwenkt. Schließlich kann der Benutzer das Sicherungsseil 45 von der Bügellagereinrichtung 15 entnehmen, indem der Sicherungsbund 51 das Topfgehäuse 13 durch die Entnahmeöffnung 31 verlässt. Die axiale Vorspannung des Schwenkbügels 21 bewirkt dabei, dass der Schwenkbügel nun wieder eine axiale Grundposition einnimmt, in der er gegen eine unbeabsichtigte Schwenkbewegung blockiert ist.

Das gezeigte Sicherungssystem bietet den Vorteil, dass die Möglichkeit zur Sicherung des Sicherungsseils 45 an dem Rahmenschloss durch geringen baulichen Aufwand geschaffen wird, da zusätzlich zu der ohnehin benötigten Handhabe 27 im Wesentlichen lediglich die Entnahmeöffnung 31 und die Schlitzaufnahme 33 an der Bügellagereinrichtung 15 erforderlich sind. Vor allem ist die Handhabung des Sicherungssystems sehr einfach und komfortabel, da der Benutzer mit derselben Hand lediglich erst den Seilkloben 47 auf die Handhabe 27 aufstecken muss und danach den Seilkloben 47 mit der Handhabe 27 gemeinsam schwenken und axial verrücken kann, um gleichzeitig eine endgültige Verriegelung des Schwenkbügels 21 und Sicherung des Sicherungsseils 45 herbeizuführen. Außerdem ist für den Benutzer ohne weiteres ersichtlich, ob das Sicherungsseil 45 mit dem Seilkloben 47 tatsächlich zuverlässig an dem Rahmenschloss gesichert ist.

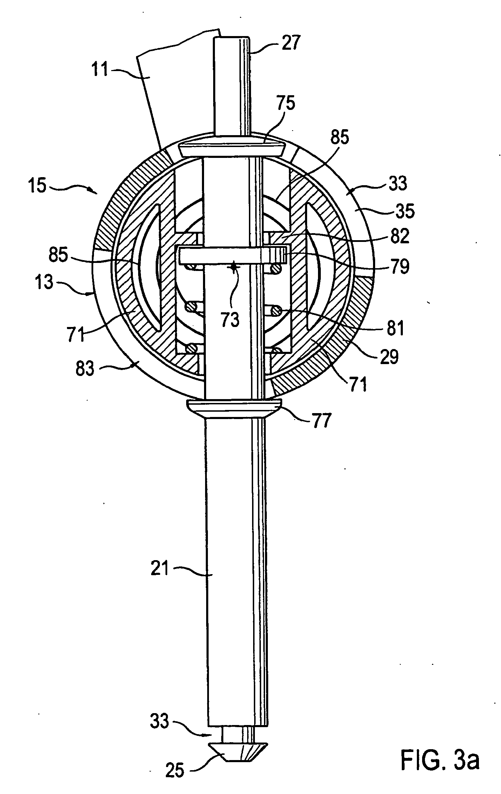

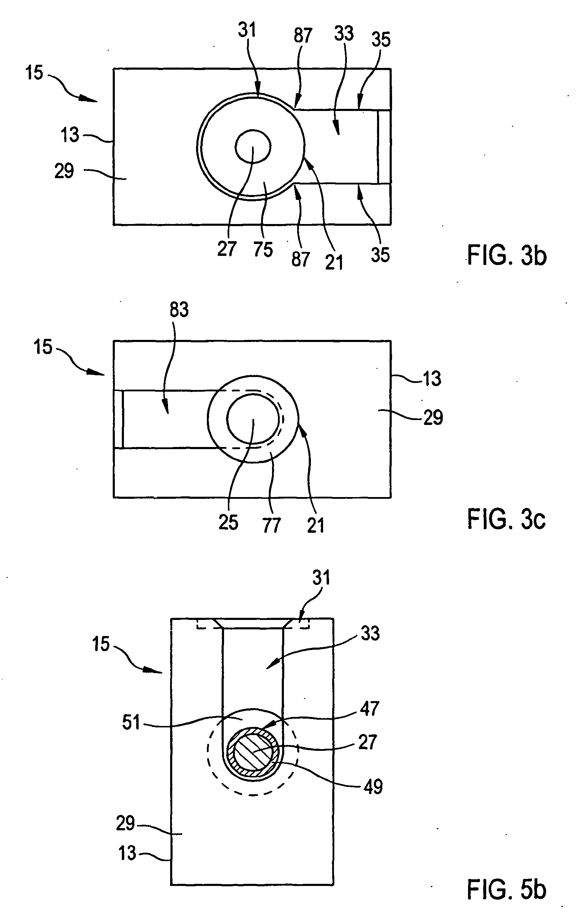

Anhand der Fig. 3 bis 7 werden nachfolgend der Aufbau und die Funktionsweise des Rahmenschlosses gemäß Fig. 1 und 2 noch genauer erläutert.

Fig. 3a zeigt die Bügellagereinrichtung 15 in einer Querschnittsansicht. Innerhalb des Topfgehäuses 13 befinden sich zwei Halbschalen 71, die den Schwenkbügel 21 umfänglich umgeben und axial beweglich lagern. Die beiden Halbschalen 71 sind innerhalb des Topfgehäuses 13 um eine zentrale Drehachse 73 drehbar gelagert, so dass der Schwenkbügel 21 zusätzlich zu der axialen Verschiebbarkeit schwenkbar gelagert ist.

Der Schwenkbügel 21 und die Handhabe 27 sind einstückig rotationssymmetrisch als ein gehärtetes Drehteil gefertigt. Der Schwenkbügel 21 besitzt einen äußeren Anschlagbund 75 am Übergang zu der Handhabe 27, einen inneren Anschlagbund 77 und einen dazwischen liegenden mittleren Anschlagbund 79. Der Schwenkbügel 21 ist mittels einer Druckfeder 81 axial in Richtung seines die Handhabe 27 tragenden Endes vorgespannt, wobei die Druckfeder 81 sich zum einen an den Halbschalen 71 und zum anderen an dem mittleren Anschlagbund 79 abstützt. Die Druckfeder 81 spannt den Schwenkbügel 21 somit in eine in Fig. 3a gezeigte axiale Grundposition vor. Die Axialbewegung des Schwenkbügels 21 entlang der Vorspannungsrichtung wird mittels des inneren Anschlagbunds 77 begrenzt, der an der Seitenwand 29 des Topfgehäuses 13 anliegt, sowie mittels des mittleren Anschlagbunds 79, der an einem Begrenzungsbund 82 der Halbschalen 71 anliegt.

In der Querschnittsansicht gemäß Fig. 3a ist ferner zu erkennen, dass die Seitenwand 29 des Topfgehäuses 13 einen Führungsschlitz 83 besitzt, der eine Schwenkbewegung des Schwenkbügels 21 um ca. 90° ermöglicht.

Außerdem ist hinter den Halbschalen 71 und dem Schwenkbügel 21 eine Spiralfeder 85 zu erkennen, die den Schwenkbügel 21 in die gezeigte vertikale Freigabestellung vorspannt.

In der in Fig. 3a gezeigten axialen Grundposition ist der Schwenkbügel 21 durch eine Blockiereinrichtung gegen eine unbeabsichtigte Schwenkbewegung aus der dargestellten Freigabestellung gesichert. Diese Blockiereinrichtung ist seitens der Bügellagereinrichtung 15 durch Blockierabschnitten 87 der Seitenwand 29 des Topfgehäuses 13 gebildet, die den Übergang zwischen der Entnahmeöffnung 31 und der Schlitzaufnahme 33 begrenzen (Fig. 3b). An diesen Blockierabschnitten 87 liegt nämlich der äußere Anschlagbund 75 des Schwenkbügels 21 an, der für die erläuterte Blockierfunktion somit als Gegenelement wirkt.

Fig. 3b zeigt eine Draufsicht auf die Bügellagereinrichtung 15 gemäß Fig. 3a, wobei insbesondere die Handhabe 27 mit dem sich hieran anschließenden äußeren Anschlagbund 75 des Schwenkbügels 21 sowie die Schlitzaufnahme 33 zu erkennen sind. Außerdem ist aus Fig. 3b ersichtlich, dass der äußere Anschlagbund 75 an den Blockierabschnitten 87 der Seitenwand 29 anliegt.

Fig. 3c zeigt eine Unteransicht der Bügellagereinrichtung 15 gemäß Fig. 3a, aus der insbesondere der Schwenkbügel 21 mit dem inneren Anschlagbund 77 und der Führungsschlitz 83 an der Seitenwand 29 zu erkennen sind.

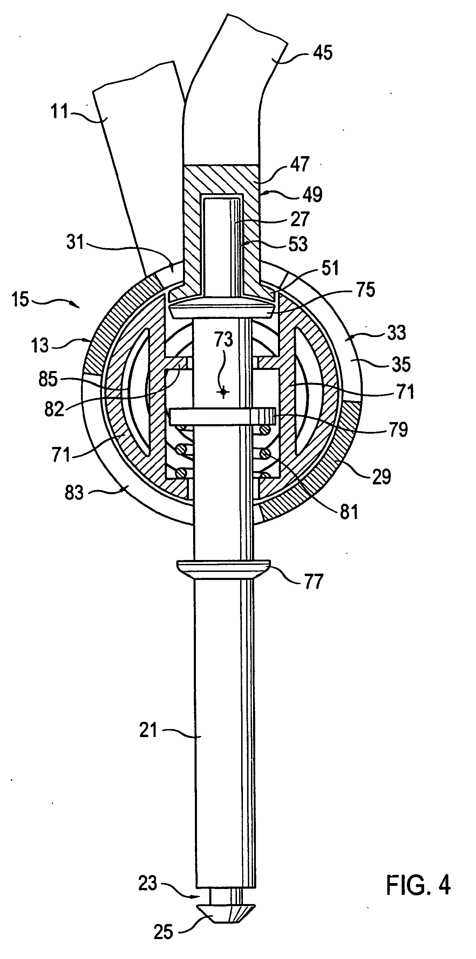

Fig. 4 zeigt die Bügellagereinrichtung 15 in einer der Fig. 3a entsprechenden Querschnittsansicht, wobei nun der Seilkloben 47 des Sicherungsseils 45 auf die Handhabe 27 aufgesetzt ist, die somit in die Aufnahmeöffnung 53 des Seilklobens 47 hineinragt. Außerdem ist der Schwenkbügel 27 mittels des Seilklobens 47 bereits entgegen dem Druck der Druckfeder 81 geringfügig axial verschoben worden, so dass der auf den äußeren Anschlagbund 75 des Schwenkbügels 21 deckungsgleich aufgesetzte Sicherungsbund 51 des Seilklobens 47 nun genau innerhalb der Seitenwand 29 des Topfgehäuses 23 angeordnet ist. Die erläuterte Blockade des Schwenkbügels 21 gegen eine unbeabsichtigte Schwenkbewegung ist somit überwunden. Der Schwenkbügel 21 nimmt jetzt also eine axiale Schwenkposition ein, während er sich weiterhin in der vertikalen Freigabestellung befindet.

Ausgehend von der in Fig. 4 gezeigten axialen Schwenkposition des Schwenkbügels 21 kann dieser nun mittels des aufgesetzten Seilklobens 47 um 90° geschwenkt und somit in die horizontale Schließstellung überführt werden. Dabei muss die von der Spiralfeder 85 ausgeübte Vorspannung überwunden werden.

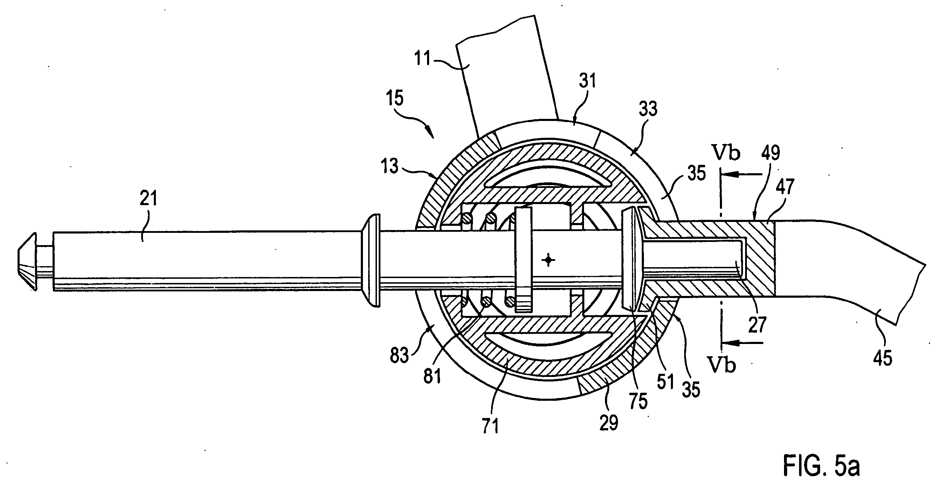

Fig. 5a zeigt den somit erreichten Zustand. Der Schwenkbügel 21 befindet sich weiterhin in der axialen Schwenkposition, d.h. der Sicherungsbund 51 des Seilklobens 47 befindet sich genau innerhalb der Seitenwand 29 des Topfgehäuses 13. Der Seilkloben 47 ist jetzt gegen eine axiale Entnahme aus der Bügellagereinrichtung 15 gesichert, da der Halsabschnitt 49 des Seilklobens 47 nun nicht mehr von der Entnahmeöffnung 31, sondern von der schmäleren Schlitzaufnahme 33 umgeben ist und der Hintergreifungsabschnitt 35 der Seitenwand 29 den Sicherungsbund 51 somit hintergreift.

Fig. 5b zeigt die Bügellagereinrichtung 15 gemäß Fig. 5a in einer Seitenquerschnittsansicht entlang einer durch den Seilkloben 47 verlaufenden Ebene. Hier ist zu erkennen, dass der die Schlitzaufnahme 33 begrenzende Hintergreifungsabschnitt 35 der Seitenwand 29 den Halsabschnitt 49 des Seilklobens 47 umgreift und den Sicherungsbund 51 hintergreift.

Ausgehend von dem in Fig. 5a und 5b gezeigten Zustand kann der Schwenkbügel 21 nun - während er in der horizontalen Schließstellung verbleibt - entgegen der von der Druckfeder 81 ausgeübten Vorspannung axial in Richtung der Bügelaufnahmeeinrichtung 19 bewegt werden, um hierdurch den Bügelkopf 25 in die Bügelaufnahmeeinrichtung 19 einzuführen, wie nachfolgend noch erläutert wird.

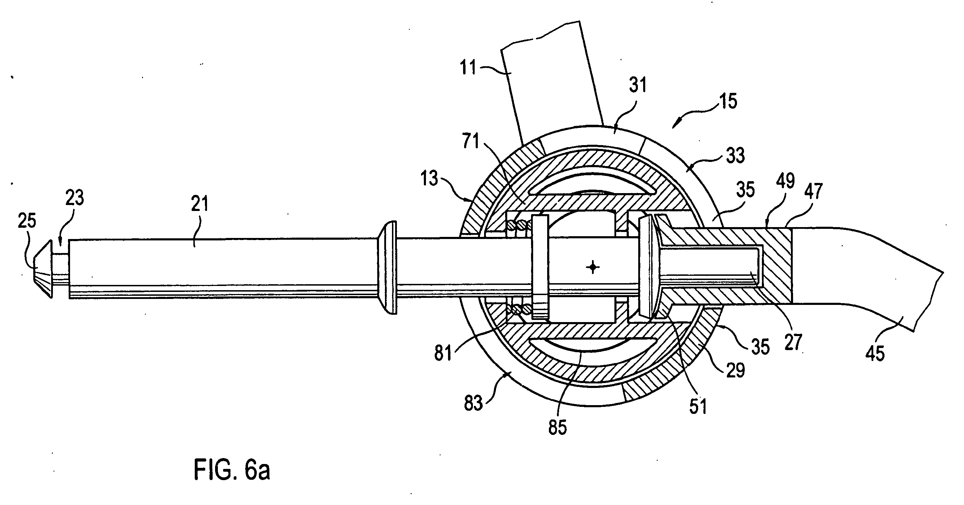

Fig. 6a zeigt die hierdurch erreichte axiale Verriegelungsposition des Schwenkbügels 21. Der Seilkloben 47 ist durch den Hintergreifungsabschnitt 35 der Seitenwand 29 weiterhin gegen eine axiale Entnahme von der Handhabe 27 gesichert. Da nun auch der Schwenkbügel 21 verriegelt und somit gegen ein Zurückschwenken in die vertikale Freigabestellung gesichert ist, kann der auf die Handhabe 27 aufgesetzte Seilkloben 47 auch nicht seitlich aus der Schlitzaufnahme 33 geführt werden.

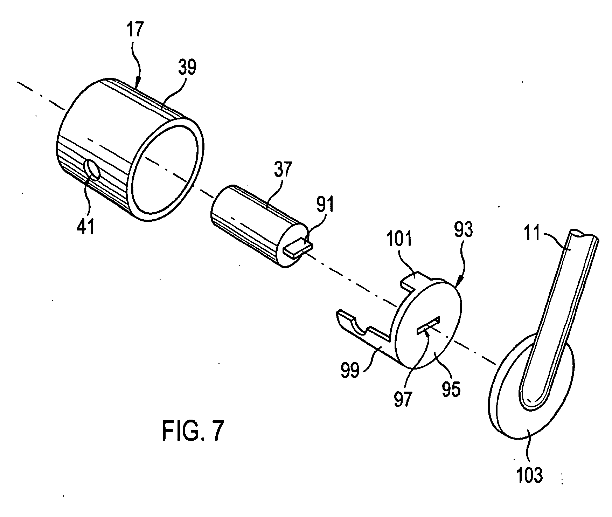

Fig. 7 illustriert in einer vereinfachten Explosionsdarstellung den Aufbau des Verriegelungsmechanismus der Bügelaufnahmeeinrichtung 19 zum Verriegeln des Schwenkbügels 21. Gezeigt ist das im Wesentlichen hohlzylindrische Topfgehäuse 17 mit der seitlichen Bügelaufnahmeöffnung 41. Ferner ist der Schließzylinder 37 gezeigt, der an seiner rückseitigen Stirnseite ein Mitnehmerelement 91 besitzt.

Fig. 7 zeigt außerdem einen Drehriegel 93 aus gehärtetem Stahl. Dieser besitzt eine Grundplatte 95 mit einer zentralen Kopplungsaussparung 97 zur direkten oder indirekten Kopplung mit dem Mitnehmerelement 91 des Schließzylinders 37. Ferner besitzt der Drehriegel 93 einen an der Grundplatte 95 seitlich angeformten Riegelabschnitt 99, der dergestalt gewölbt ist, dass er in den Zwischenraum zwischen dem Schließzylinder 37 und dem Topfgehäuse 17 eingesetzt werden kann. Weiterhin besitzt der Drehriegel 93 eine Verbindungszunge 101 zur Kopplung mit einer Zugfeder (in Fig. 7 nicht gezeigt).

Schließlich zeigt Fig. 7 eine Rückseitenwand 103, an der der Verbindungsbügel 11 befestigt ist. Abweichend von der vereinfachten Darstellung gemäß Fig. 7 kann das Topfgehäuse 17 auch einstückig mit der Rückseitenwand 103 ausgebildet sein.

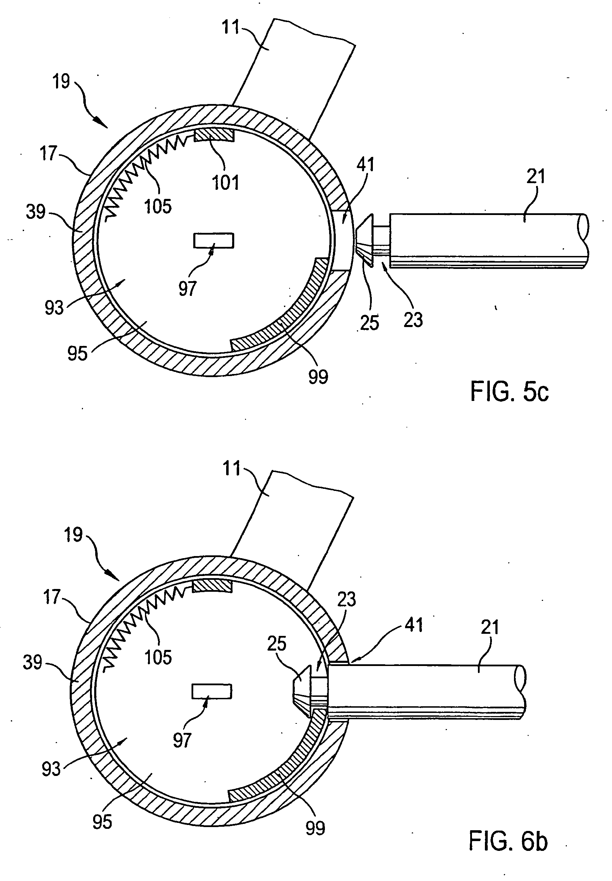

Die Funktionsweise des in Fig. 7 gezeigten Verriegelungsmechanismus wird nachfolgend anhand der Fig. 5c und 6b erläutert.

Fig. 5c zeigt in einer vereinfachten Querschnittsansicht die Bügelaufnahmeeinrichtung 19 und das freie Ende des Schwenkbügels 21 in dem Zustand der Bügellagereinrichtung 15 gemäß Fig. 5a und 5b, wobei der Schwenkbügel 21 sich zwar bereits in der Schließstellung, jedoch noch in der axialen Schwenkposition befindet. In diesem Zustand reicht der Bügelkopf 25 gerade bis unmittelbar vor die Bügelaufnahmeöffnung 41 der Bügelaufnahmeeinrichtung 19. Der Drehriegel 93 ist mittels einer an der Verbindungszunge 101 angreifenden Zugfeder 105 dergestalt vorgespannt, dass der Riegelabschnitt 99 die Bügelaufnahmeöffnung 41 innenseitig teilweise verdeckt.

Falls nun der Schwenkbügel 21 - wie anhand der Fig. 6a erläutert - durch entsprechende Betätigung der Handhabe 27 bzw. des hierauf aufgesetzten Seilklobens 47 axial in Richtung der Bügelaufnahmeeinrichtung 19 bewegt wird, so greift zunächst der abgeschrägte Bügelkopf 25 an dem Riegelabschnitt 99 an und drängt diesen kurzzeitig zurück, wobei der innerhalb des Topfgehäuses 17 drehbar gelagerte Drehriegel 93 eine Drehbewegung entgegen der Zugkraft der Zugfeder 105 durchführt. Sobald die Verriegelungsnut 23 sich auf Höhe des Riegelabschnitts 99 befindet, schnappt dieser aufgrund des von der Zugfeder 105 ausgeübten Drehmoments zurück und greift in die Verriegelungsnut 23 ein.

Fig. 6b zeigt in einer weiteren Querschnittsansicht den somit erreichten Zustand, der dem in Fig. 6a gezeigten Zustand der Bügellagereinrichtung 15 entspricht. Der Schwenkbügel 21 befindet sich nun in der axialen Verriegelungsposition, wobei der Bügelkopf 25 von dem Riegelabschnitt 99 des Drehriegels 93 teilweise hintergriffen wird. Der Schwenkbügel 21 ist somit gegen eine axiale Entnahme aus der Bügelaufnahmeöffnung 41 gesichert, wobei der Riegelabschnitt 99 insbesondere durch die Seitenwand 39 des Topfgehäuses 17 gegen eine Manipulation von außen geschützt ist.

Zu dem anhand der Fig. 7, 5c und 6b erläuterten Verriegelungsmechanismus ist noch anzumerken, dass der erläuterte Schnappmechanismus des Drehriegels 93 nicht zwingend erforderlich ist. Der Drehriegel 93 kann alternativ auch durch Zwangsführung mit dem Schließzylinder 37 gekoppelt sein. Wesentlich ist, dass innerhalb der Bügelaufnahmeeinrichtung 19 lediglich der Verriegelungsmechanismus beherbergt ist. Dies ermöglicht eine zentrale Anordnung des Schließzylinders 37 und somit den Einsatz eines drehbeweglich belagerten Drehriegels 93. Dieser schützt das Rahmenschloss gegen ein unbefugtes Entriegeln nach dem Prinzip des "Stoßöffnens". Außerdem bildet die aus gehärtetem Stahl gefertigte Grundplatte 95 einen besonders wirksamen Schutz der rückseitigen Stirnseite des Schließzylinders gegen Aufbruch- oder sonstige Manipulationsversuche.

Außerdem ist zu dem erläuterten Verriegelungsmechanismus noch anzumerken, dass anstelle der Zugfeder 105 auch eine Druckfeder vorgesehen sein kann, um den Drehriegel 93 in Verriegelungsrichtung vorzuspannen.

Zu dem Ausführungsbeispiel gemäß Fig. 1 bis 7 ist auch noch anzumerken, dass die indirekte Befestigung der Bügellagereinrichtung 15 und der Bügelaufnahmeeinrichtung 19 an dem Zweiradrahmen mittels des Verbindungsbügels 11 nicht zwingend erforderlich ist und typischerweise bei der Nachrüstung zum Einsatz gelangt. Alternativ ist es möglich, die entsprechenden Topfgehäuse 13, 17 - insbesondere bei der Originalausstattung des Zweirads - direkt mit dem Zweiradrahmen zu verbinden.

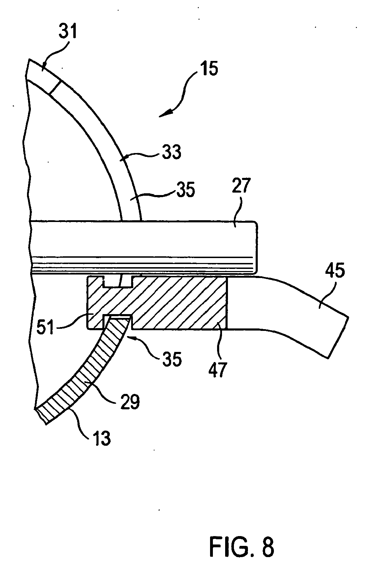

Fig. 8 zeigt eine der Querschnittsansicht gemäß Fig. 5a entsprechende Querschnittsansicht eines Teils einer alternativen Ausführungsform der Bügellagereinrichtung 15 und des Sicherungsseils 45. Bei dieser Ausführungsform wird der Seilkloben 47 zwar ebenfalls über eine Entnahmeöffnung 31 an der Seitenwand 29 des Topfgehäuses 13 seitlich in eine Schlitzaufnahme 33 eingeführt, so dass ein die Schlitzaufnahme 33 umgebender Hintergreifungsabschnitt 35 der Seitenwand 29 einen Sicherungsbund 51 des Seilklobens 47 hintergreift.

Allerdings wird bei dieser Ausführungsform der Seilkloben 47 nicht auf die Handhabe 27 aufgesetzt. Stattdessen wird der Seilkloben 47 zuerst seitlich in die Schlitzaufnahme 33 eingeführt, bevor die Handhabe 27 durch separate Schwenkbetätigung aus einer vertikalen Freigabestellung in eine horizontale Schließstellung überführt wird, in der sie den Seilkloben 47 gegen eine seitliche Entnahme aus der Schlitzaufnahme 33 blockiert.

Der weitere Aufbau der Bügellagereinrichtung 15 dieser Ausführungsform kann dem anhand der Fig. 3 bis 7 erläuterten Aufbau entsprechen. Insbesondere kann eine axiale Verschiebbarkeit des Schwenkbügels 21 bzw. der Handhabe 27 vorgesehen sein.

### Bezugszeichenliste

- 11: Verbindungsbügel
- 13: Topfgehäuse
- 15: Bügellagereinrichtung
- 17: Topfgehäuse
- 19: Bügelaufnahmeeinrichtung
- 21: Schwenkbügel
- 23: Verriegelungsnut
- 25: Bügelkopf
- 27: Handhabe
- 29: Seitenwand
- 31: Entnahmeöffnung
- 33: Schlitzaufnahme
- 35: Hintergreifungsabschnitt
- 37: Schließzylinder
- 39: Seitenwand
- 41: Bügelaufnahmeöffnung
- 45: Sicherungsseil
- 47: Seilkloben
- 49: Halsabschnitt
- 51: Sicherungsbund
- 53: Aufnahmeöffnung
- 55: Schlaufe
- 61: Schlinge
- 63: Laternenpfosten
- 71: Halbschale
- 73: Drehachse
- 75: äußerer Anschlagbund
- 77: innerer Anschlagbund
- 79: mittlerer Anschlagbund
- 81: Druckfeder
- 82: Begrenzungsbund
- 83: Führungsschlitz
- 85: Spiralfeder
- 87: Blockierabschnitt
- 91: Mitnehmerelement
- 93: Drehriegel
- 95: Grundplatte
- 97: Kopplungsaussparung
- 99: Riegelabschnitt
- 101: Verbindungszunge
- 103: Rückseitenwand
- 105: Zugfeder

## Patentansprüche

1. Sicherungssystem mit einem Schwenkbügel-Rahmenschloss für ein Zweirad und mit einem Sicherungsseil (45), das an einem Ende einen Seilkloben (47) aufweist, wobei das Rahmenschloss umfasst:
- eine Bügellagereinrichtung (15), an der ein Schwenkbügel (21) schwenkbar gelagert ist, der zwischen einer Freigabestellung und einer Schließstellung schwenkbar ist,
- eine Bügelaufnahmeeinrichtung (19) zur Aufnahme des freien Endes des Schwenkbügels in der Schließstellung,
- eine Handhabe (27), die für eine Schwenkbetätigung des Schwenkbügels mit dem Schwenkbügel verbunden ist, und
- eine Befestigungseinrichtung, durch die ein mit einem Sicherungsbund (51) versehener Seilkloben (47) des Sicherungsseils (45) an dem Rahmenschloss befestigbar ist,
wobei die Befestigungseinrichtung des Rahmenschlosses einen Hintergreifungsabschnitt (35) der Bügellagereinrichtung (15) aufweist, an dem der Seilkloben (47) mittels der Handhabe (27) **dadurch** sicherbar ist, dass der Schwenkbügel (21) mittels der Handhabe aus der Freigabestellung in die Schließstellung geschwenkt wird, **dadurch gekennzeichnet,**
**dass** der Hintergreifungsabschnitt (35) eine Schlitzaufnahme (33) umgibt, in die ein Halsabschnitt (49) des Seilklobens (47) seitlich einführbar ist.

2. Sicherungssystem nach Anspruch 1,
**dadurch gekennzeichnet,**
**dass** durch eine Schwenkbetätigung des Schwenkbügels (21) aus der Freigabestellung in die Schließstellung der Seilkloben (47) mittels der Handhabe (27) gegen eine seitliche Entnahme aus dem Hintergreifungsabschnitt (35) sicherbar ist.

3. Sicherungssystem nach einem der vorhergehenden Ansprüche,
**dadurch gekennzeichnet,**
**dass** der Seilkloben (47) durch den Hintergreifungsabschnitt (35) gegen eine axiale Entnahme von dem Rahmenschloss sicherbar ist.

4. Sicherungssystem nach einem der vorhergehenden Ansprüche,
**dadurch gekennzeichnet,**
**dass** der Seilkloben (47) derart seitlich in die Befestigungseinrichtung einführbar ist, dass der Hintergreifungsabschnitt (35) den Sicherungsbund (51) des Seilklobens zumindest teilweise hintergreift

5. Sicherungssystem nach einem der vorhergehenden Ansprüche,
**dadurch gekennzeichnet,**
**dass** der Seilkloben (47) auf die Handhabe (27) aufsetzbar ist.

6. Sicherungssystem nach Anspruch 5,
**dadurch gekennzeichnet,**
**dass** die Handhabe mittels des aufgesetzten Seilklobens schwenkbetätigbar ist, um den Schwenkbügel (21) aus der Freigabestellung in die Schließstellung zu schwenken, und
**dass** die schwenkbetätigte Handhabe (27) mit aufgesetztem Seilkloben (47) derart seitlich in die Befestigungseinrichtung einführbar ist, dass der Hintergreifungsabschnitt (35) den Sicherungsbund (51) des Seilklobens (47) zumindest teilweise hintergreift.

7. Sicherungssystem nach einem der Ansprüche 5 oder 6,
**dadurch gekennzeichnet,**
**dass** die Handhabe (27) als ein Aufsetzdorn ausgebildet ist, auf den der Seilkloben (47) in axialer Richtung aufsetzbar ist.

8. Sicherungssystem nach einem der vorhergehenden Ansprüche,
**dadurch gekennzeichnet,**
**dass** die Handhabe (27) durch einen axialen Verlängerungsabschnitt des Schwenkbügels (21) gebildet ist und der Seilkloben (47) auf den axialen Verlängerungsabschnitt aufsetzbar ist,
und/oder
**dass** der Schwenkbügel (21) als ein Drehteil gefertigt ist.

9. Sicherungssystem nach einem der vorhergehenden Ansprüche,
**dadurch gekennzeichnet,**
**dass** die Schwenkachse (73) des Schwenkbügels (21) durch die Bügellagereinrichtung (15) verläuft.

10. Sicherungssystem nach einem der vorhergehenden Ansprüche,
**dadurch gekennzeichnet,**
**dass** der Schwenkbügel (21) an der Bügellagereinrichtung (15) axial in Richtung der Handhabe (27) vorgespannt ist.

11. Sicherungssystem nach einem der vorhergehenden Ansprüche,
**dadurch gekennzeichnet,**
**dass** der Schwenkbügel (21) an der Bügellagereinrichtung (15) in eine axiale Grundposition vorgespannt ist,
**dass** die Bügellagereinrichtung (15) eine Blockiereinrichtung aufweist, die den Schwenkbügel (21) gegen eine unbeabsichtigte Schwenkbewegung sichert, wenn der Schwenkbügel in der Freigabestellung die axiale Grundposition einnimmt, und
**dass** der Schwenkbügel (21) in der Freigabestellung mittels der Handhabe (27) aus der axialen Grundposition in eine axiale Schwenkposition bewegbar ist, in der der Schwenkbügel aus der Freigabestellung in die Schließstellung frei schwenkbar ist, wobei die Blockiereinrichtung vorzugsweise ein Anschlagelement (87) aufweist, das mit einem Gegenelement (75) des Schwenkbügels (21) zusammenwirkt.

12. Sicherungssystem nach einem der Ansprüche 10 oder 11,
**dadurch gekennzeichnet,**
**dass** der Schwenkbügel (21) in der Schließstellung mittels der Handhabe (27) entgegen der axialen Vorspannung in eine axiale Verriegelungsposition bewegbar ist, in der das freie Ende des Schwenkbügels (21) in die Bügelaufnahmeeinrichtung (19) eingreift.

13. Sicherungssystem nach einem der vorhergehenden Ansprüche,
**dadurch gekennzeichnet,**
**dass** die Bügelaufnahmeeinrichtung (19) einen Verriegelungsmechanismus zum Verriegeln des aufgenommenen freien Endes des Schwenkbügels (21) besitzt.

14. Sicherungssystem nach Anspruch 13,
**dadurch gekennzeichnet,**
**dass** der Verriegelungsmechanismus einen Schließzylinder (37) und einen hiermit gekoppelten Drehriegel (93) aufweist, der mittels des Schließzylinders zu einer Drehbewegung um die Längsachse des Schließzylinders antreibbar ist,
wobei der Drehriegel vorzugsweise aus gehärtetem Stahl gefertigt ist und eine Grundplatte (95) aufweist, die die rückseitige Stirnseite des Schließzylinders abdeckt.

15. Sicherungssystem nach einem der vorhergehenden Ansprüche,
**dadurch gekennzeichnet,**
**dass** das Rahmenschloss einen Verbindungsbügel (11) aufweist, an dessen einem Ende die Bügellagereinrichtung (15) und an dessen anderem Ende die Bügelaufnahmeeinrichtung (19) befestigt ist.

16. Sicherungssystem nach einem der vorhergehenden Ansprüche,
**dadurch gekennzeichnet,**
**dass** der Seilkloben (47) hohl mit einer Aufnahmeöffnung (53) zur Aufnahme eines Aufsetzdorns ausgebildet ist,
und/oder
**dass** das Sicherungsseil (45) an dem anderen Ende eine Schlaufe (55) zur Bildung einer Schlinge (61) aufweist,
und/oder
**dass** das Sicherungsseil (45) als ein Stahlseil, ein Seil mit gehärteten Hülsen, ein Spiralkabel, eine Kette oder ein Gelenkstabbügel ausgebildet ist.

## Claims

1. A securing system having a pivoting hoop frame lock for a two-wheeler and having a securing cable (45) which has a cable block (47) at one end, wherein the frame lock comprises:
- a hoop bearing device (15) at which a pivoting hoop (21) is pivotably supported which is pivotable between a release position and a closed position;
- a hoop receiving device (19) for the reception of the free end of the pivoting hoop in the closed position;
- a handle (27) which is connected to the pivoting hoop for a pivot actuation of the pivoting hoop; and
- a fastening device by which a cable block (47) of the securing cable (45) can be fastened to the frame lock, said cable block being provided with a securing collar (51),
wherein the fastening device of the frame lock has a catch section (35) of the hoop bearing device (15) to which the cable block (47) can be secured by means of the handle (27) in that the pivoting hoop (21) is pivoted by means of the handle out of the release position into the closed position,
**characterised in that**
the catch section (35) surrounds a slot receiver (33) into which a neck section (49) of the cable block (47) can be laterally introduced.

2. A securing system in accordance with claim 1,
**characterised in that**
the cable block (47) can be secured by means of the handle (27) against a lateral removal from the catch section (35) by a pivot actuation of the pivoting hoop (21) out of the release position into the closed position.

3. A securing system in accordance with one of the preceding claims,
**characterised in that**
the cable block (47) can be secured against an axial removal from the frame lock by the catch section (35).

4. A securing system in accordance with any one of the preceding claims,
**characterised in that**
the cable block (47) can be introduced laterally into the fastening device such that the catch section (35) at least partly engages behind the securing collar (51) of the cable block.

5. A securing system in accordance with any one of the preceding claims,
**characterised in that**
the cable block (47) can be mounted onto the handle (27).

6. A securing system in accordance with claim 5,
**characterised in that**
the handle is pivotally actuable by means of the mounted cable block to pivot the pivoting hoop (21) out of the release position into the closed position; and
**in that** the pivotally actuated handle (27) with the mounted cable block (47) can be introduced laterally into the fastening device such that the catch section (35) at least partly engages behind the securing collar (51) of the cable block (47).

7. A securing system in accordance with one of the claims 5 or 6,
**characterised in that**
the handle (27) is formed as a mounting mandrel onto which the cable block (47) can be mounted in the axial direction.

8. A securing system in accordance with any one of the preceding claims,
**characterised in that**
the handle (27) is formed by an axial extension section of the pivoting hoop (21) and the cable block (47) can be mounted onto the axial extension section;
and/or
**in that** the pivoting hoop (21) is made as a rotary part.

9. A securing system in accordance with any one of the preceding claims,
**characterised in that**
the pivot axis (73) of the pivoting hoop (21) runs through the hoop bearing device (15).

10. A securing system in accordance with any one of the preceding claims,
**characterised in that**
the pivoting hoop (21) is biased axially at the hoop bearing device (15) in the direction of the handle (27).

11. A securing system in accordance with any one of the preceding claims,
**characterised in that**
the pivoting hoop (21) is biased at the hoop bearing device (15) into an axial base position;
**in that** the hoop bearing device (15) has a blocking device which secures the pivoting hoop (21 against an unintentional pivot movement when the pivoting hoop adopts the axial base position in the released position; and
**in that** the pivoting hoop (21) is movable by means of the handle (27) in the release position out of the base position into an axial pivot position in which the pivoting hoop is freely pivotable out of release position into the closed position,
wherein the blocking device preferably has an abutment element (87) which cooperates with a counter-element (75) of the pivoting hoop (21).

12. A securing system in accordance with one of the claims 10 or 11,
**characterised in that**
the pivoting hoop (21) is movable in the closed position by means of the handle (27) against the axial bias into an axial locking position in which the free end of the pivoting hoop (21) engages into the hoop receiving device (19).

13. A securing system in accordance with any one of the preceding claims,
**characterised in that**
the hoop receiving device (19) has a locking mechanism for locking the received free end of the pivoting hoop (21).

14. A securing system in accordance with claim 13,
**characterised in that**
the locking mechanism has a lock cylinder (37) and a rotary bolt (93) coupled hereto and can be driven about the longitudinal axis of the lock cylinder by means of the lock cylinder,
wherein the rotary bolt is preferably produced from hardened steel and has a base plate (95) which covers the rear end face of the lock cylinder.

15. A securing system in accordance with any one of the preceding claims,
**characterised in that**
the frame lock has a connection hoop (11) to whose one end the hoop bearing device (15) is fastened and to whose other end the hoop receiving device (19) is fastened.

16. A securing system in accordance with any one of the preceding claims,
**characterised in that**
the cable block (47) is formed as hollow with a receiving opening (53) for receiving a mounting mandrel;
and/or
**in that** the securing cable (45) has a loop (55) for forming a snare (61) at the other end;
and/or
**in that** the securing cable (45) is formed as a steel cable, a cable having hardened sleeves, a spiral cable, a chain or a jointed bar hoop.

## Revendications

1. Système de verrouillage pour bicyclette avec une serrure sur cadre à anse pivotante, et avec un câble de sécurité (45) qui comprend une tête de câble (47) à une extrémité, dans lequel la serrure sur cadre comprend :
- un moyen de montage d'anse (15) sur lequel une anse pivotante (21) est montée avec faculté de pivotement, l'anse étant capable de pivoter entre une position de libération et une position de fermeture,
- un moyen de réception d'anse (19) destiné à recevoir l'extrémité libre de l'anse pivotante dans la position de fermeture,
- une manette (27) qui est reliée à l'anse pivotante en vue d'un actionnement de pivotement de l'anse pivotante, et
- un moyen de fixation, via lequel la tête de câble (47), dotée d'une collerette de sécurité (51), du câble de sécurité (45) peut être fixée sur la serrure sur cadre,
dans lequel le moyen de fixation de la serrure sur câble comprend un tronçon (35) du moyen de montage d'anse (15), d'engagement par l'arrière, sur lequel la tête de câble (47) peut être bloquée au moyen de la manette (27) du fait que l'anse pivotante (27) est pivotée au moyen de la manette depuis la position de libération jusque dans la position de fermeture,
**caractérisé en ce que** le
le tronçon d'engagement par l'arrière (35) entoure une réception en forme de fente (33), dans laquelle un tronçon d'encolure (49) de la tête de câble (47) peut être introduit latéralement.

2. Système de verrouillage selon la revendication 1,
**caractérisé en ce que**, par un actionnement de pivotement de l'anse pivotante (21) depuis la position de libération jusque dans la position de fermeture, la tête de câble (47) est susceptible d'être bloquée au moyen de la manette (27) à l'encontre d'un enlèvement latéral hors du tronçon d'engagement par l'arrière (35).

3. Système de verrouillage selon l'une des revendications précédentes, **caractérisé en ce que** la tête de câble (47) peut être bloquée par le tronçon d'engagement par l'arrière (35) à l'encontre d'un enlèvement axial depuis la serrure sur cadre.

4. Système de verrouillage selon l'une des revendications précédentes, **caractérisé en ce que** la tête de câble (47) peut être introduite latéralement dans le moyen de fixation de telle façon que le tronçon d'engagement par l'arrière (35) engage au moins partiellement par l'arrière la collerette de sécurité (51) de la tête de câble.

5. Système de verrouillage selon l'une des revendications précédentes, **caractérisé en ce que** la tête de câble (47) peut être posée sur la manette (27).

6. Système de verrouillage selon la revendication 5,
**caractérisé en ce que** la manette est susceptible d'être actionnée en pivotement au moyen de la tête de câble posée sur celle-ci, afin de faire pivoter l'anse pivotante (21) hors de la position de libération jusque dans la position de fermeture, et
**en ce que** la manette (27) actionnée en pivotement est susceptible d'être introduite avec la tête de câble (47) posée sur celle-ci latéralement dans le moyen de fixation de telle façon que le tronçon d'engagement par l'arrière (35) engage au moins partiellement par l'arrière la collerette de sécurité (51) de la tête de câble (47).

7. Système de verrouillage selon l'une des revendications 5 ou 6, **caractérisé en ce que** la manette (27) est réalisée sous la forme d'un ergot de pose, sur lequel la tête de câble (47) peut être posée en direction axiale.

8. Système de verrouillage selon l'une des revendications précédentes, **caractérisé en ce que** la manette (27) est formée par un tronçon de prolongement axial de l'anse pivotante (21), et la tête de câble (47) peut être posée sur le tronçon de prolongement axial,
et/ou **en ce que** l'anse pivotante (21) est fabriquée comme une pièce tournée.

9. Système de verrouillage selon l'une des revendications précédentes, **caractérisé en ce que** l'axe de pivotement (73) de l'anse pivotante (21) s'étend à travers le moyen de montage d'anse (15).

10. Système de verrouillage selon l'une des revendications précédentes, **caractérisé en ce que** l'anse pivotante (21) est précontrainte sur le moyen de montage d'anse (15) axialement en direction de la manette (27).

11. Système de verrouillage selon l'une des revendications précédentes, **caractérisé en ce que**
l'anse pivotante (21) est précontrainte sur le moyen de montage d'anse (15) jusque dans une position de base axiale,
le moyen de montage d'anse (15) comprend un moyen de blocage qui bloque l'anse pivotante (21) à l'encontre d'un mouvement de pivotement inopiné, quand l'anse pivotante dans la situation de libération occupe la position de base axiale, et
l'anse pivotante (21) dans la situation de libération est déplaçable au moyen de la manette (27) hors de la position de base axiale jusque dans une position de pivotement axial dans laquelle l'anse pivotante est capable de pivoter librement hors de la position de libération jusque dans la position de fermeture,
dans lequel le moyen de blocage présente de préférence un élément de butée (87) qui coopère avec un élément antagoniste (75) de lance pivotante (21).

12. Système de verrouillage selon l'une des revendications 10 ou 11, **caractérisé en ce que** l'anse pivotante (21) dans la situation de fermeture est déplaçable au moyen de la manette (27) à l'encontre de la précontrainte axiale jusque dans une position de verrouillage axial dans laquelle l'extrémité libre de l'anse pivotante (21) s'engage dans le moyen de réception d'anse (19).

13. Système de verrouillage selon l'une des revendications précédentes, **caractérisé en ce que** le moyen de réception d'anse (19) possède un mécanisme de verrouillage pour verrouiller l'extrémité libre reçue de lance pivotante (21).

14. Système de verrouillage selon la revendication 13,
**caractérisé en ce que** le mécanisme de verrouillage comprend un cylindre de fermeture (37) et un verrou rotatif (93) couplé à celui-ci, qui peut être entraîné au moyen du cylindre fermeture en un mouvement de rotation autour de l'axe longitudinal du cylindre de fermeture,
et le verrou rotatif est réalisé de préférence en acier durci et comporte une plaque de base (95) qui recouvre le côté frontal postérieur du cylindre de fermeture.

15. Système de verrouillage selon l'une des revendications précédentes, **caractérisé en ce que** la serrure sur cadre comprend un étrier de jonction (11) tel que le moyen de montage d'anse (15) est fixé à l'une de ses extrémités et le moyen de réception d'anse (19) est fixé à son autre extrémité.

16. Système de verrouillage selon l'une des revendications précédentes, **caractérisé en ce que**
la tête de câble (47) est réalisée creuse avec une ouverture de réception (53) pour recevoir un ergot de pose,
et/ou
**en ce que** le câble de sécurité (45) comprend à l'autre extrémité une boucle (55) pour former une élingue (61),
et/ou
**en ce que** le câble de sécurité (45) est réalisé sous forme d'un câble en acier, d'un câble avec des douilles durcies, d'un câble spiralé, d'une chaîne, ou d'un arceau à tiges articulées.
